# EUROPÄISCHE PATENTANMELDUNG

(11) **EP 1 840 986 A1**
(43) Veröffentlichungstag der Anmeldung: **03.10.2007**
(21) Anmeldenummer: 07005579.3
(22) Anmeldetag: 20.03.2007
(51) Int. Cl.: H01M 2/10, H01M 10/12

(54) **Tragbares Mehrzweckstartergerät**

(30) Priorität: 27.03.2006 DE 102006014415
(71) Anmelder: Hess, Axel, 53547 Hausen (DE)
(72) Erfinder: Hess, Axel, 53547 Hausen (DE)
(74) Vertreter: Wolf, Michael

(57) **Zusammenfassung**

Die Erfindung betrifft eine tragbares Mehrzweckstartergerät, bestehend aus einem Gehäuse (1) mit einem Gehäuseboden (2) zur Aufnahme mindestens einer aufladbaren Batterie (3) und im Gehäuse (1) angeordneten elektrischen Anschlusselementen (4) zur Verbindung der Batterie (3) mit im Gehäuse (1) angeordneten elektrischen Komponenten (5). Nach der Erfindung ist vorgesehen, dass der Gehäuseboden (2) fest, aber lösbar am Gehäuse (1) angeordnet und zwischen der Batterie (3) und den elektrischen Anschlusselementen (4) mindestens ein sich beim Lösen des Gehäusebodens (2) vom Gehäuse (1) trennendes elektrisches Steckerelement (6) vorgesehen ist.

## Beschreibung

Die Erfindung betrifft ein tragbares Mehrzweckstartergerät gemäß dem Oberbegriff des Patentanspruchs 1.

Ein tragbares Mehrzweckstartergerät der eingangs genannten Art besteht aus einem Gehäuse mit einem Gehäuseboden zur Aufnahme mindestens einer aufladbaren Batterie und im Gehäuse angeordneten elektrischen Anschlusselementen zur Verbindung der Batterie mit im Gehäuse angeordneten elektrischen Komponenten.

Die zur Zeit auf dem Markt befindlichen Mehrzweckstartergeräte weisen in der Regel zur einfacheren Handhabung ein als Traggriff ausgeformtes Gehäuseoberteil auf und besitzen an den Außenflächen des Gehäuses entsprechende Aufnahme- und Anschlussvorrichtungen zur Herstellung der Verbindung mit im Mehrzweckstartergerät eingebauten elektrischen Komponenten. Zweckmäßigerweise sind an den seitlichen Gehäusewänden Befestigungsvorrichtungen zur Aufnahme des Starterkabels vorgesehen, das mit jeweils einem farblich unterschiedlich gekennzeichneten Anschluss zur Verbindung mit dem Plus- und dem Minuspol des Mehrzweckstartergeräts ausgerüstet ist. Je nach Ausstattung der Geräte sind eine Reihe weiterer am Gehäuse angebrachter Anschlussbuchsen und Anzeigevorrichtungen für zusätzliche Anwendungen vorgesehen.

Wie bereits durch die Bezeichnung "Tragbares Mehrzweckstartergerät" deutlich wird, handelt es sich bei dem der Erfindung zugrunde liegenden Mehrzweckstartergerät um ein tragbares Gerät mit einer Reihe zusätzlicher Funktionen. Dabei besteht jedoch die primäre Funktion des Gerätes in der Bereitstellung von ausreichend hoher elektrischer Energie durch eine aufladbare Batterie, um beispielsweise Automotoren zu starten, wenn witterungsbedingt die Leistung der Autobatterie stark herabgesetzt ist.

Doch die Vorhaltung eines derartigen Gerätes allein für solche Fälle hat sich als nicht vorteilhaft erwiesen, denn insbesondere Heimwerker und Camper benötigen häufig Geräte mit weiteren zusätzlichen Funktionen, die ein solches tragbares Mehrzweckstartergerät bereitstellen kann.

Daher bestehen weitere Ausbildungen eines erfindungsgemäßen Mehrzweckstartergerätes darin, dass sie beispielsweise zusätzlich mit einem Kompressor zum Aufpumpen von Autoreifen, Luftmatratzen oder Schlauchbooten ausgestattet sind. Weitere nützliche Ausstattungsmerkmale, wie die Ausrüstung mit einem integrierten Stromwandler, der von 12 V Gleichstrom ausgehend Wechselstrom von 110 V bis zu 230 V liefert, können hinzukommen. Darüberhinaus können derartige Mehrzweckstartergeräte mit weiteren Hilfseinrichtungen, wie beispielsweise mit Arbeits- oder Notleuchten, ausgestattet sein.

Nach der DE 202 10 884 U1 ist ein Mehrzweck-Ladegerät mit Stromerzeugungs- und Beleuchtungsfunktion bekannt. Ein solches Ladegerät besteht aus einem Gehäuse, einem Getriebe, einem Generator, einer Spannungs- und Stromregelungsschleife, einer Batterie und einer Kurbel, mit der durch Drehen elektrischer Strom erzeugt wird, wobei die erzeugte Leistung in einer Batterie gespeichert wird und bedarfsweise abgegeben werden kann. Dieses Ladegerät ist vornehmlich zur Wiederaufladung von Batterien von beispielsweise Notebooks, tragbaren Audiogeräten oder Mobiltelefonen geeignet.

Desweiteren ist ein tragbares Batterieladegerät nach DE 100 81 593 B4 bekannt, dass so beschaffen ist, dass es eine an einer Mobilstation angebrachte Batteriegruppe aufnehmen und laden kann oder zum Nachladen einer separaten Batteriegruppe geeignet ist. Dieses Batterieladegerät ist mit einer Ladeeinheit ausgestattet, die ein leichtes und im Wesentlichen von einer Stromversorgung unabhängiges Nachladen von z. B. an einer Mobilstation angebrachten Batteriegruppe für verschiedenartige elektronische oder elektrische Geräte ermöglicht.

Bei den in den vorgenannten Druckschriften offenbarten Geräten handelt es sich primär um Ladegeräte zum Aufladen von Batterien, wobei diese Geräte ebenfalls mit weiteren Funktionen ausgestattet sein können. Sie dienen an dieser Stelle lediglich als Hintergrundinformation.

Nachteilig bei allen bisher bekannten Mehrzweckstartergeräten ist, dass die Batterie stets fest im Gehäuse eingebaut ist und somit nicht ohne Weiteres gewechselt werden kann. Erfahrungsgemäß ist dies allerdings je nach Nutzung des Mehrzweckstartergerätes nach einigen Jahren erforderlich.

Der Erfindung liegt demgemäß die Aufgabe zugrunde, bei einem Mehrzweckstartergerät der eingangs genannten Art den Batterieaustausch zu vereinfachen.

Diese Aufgabe ist mit einem Mehrzweckstartergerät der eingangs genannten Art durch die im Kennzeichen des Patentanspruchs 1 aufgeführten Merkmale gelöst.

Nach der Erfindung ist also ein Mehrzweckstartergerät vorgesehen, beim dem der Gehäuseboden fest, aber lösbar am Gehäuse angeordnet und zwischen der Batterie und den elektrischen Anschlusselementen mindestens ein sich beim Lösen des Gehäusebodens vom Gehäuse trennendes, elektrisches Steckerelement vorgesehen ist.

Mit anderen Worten ausgedrückt, handelt es sich bei dem erfindungsgemäßen Mehrzweckstartergerät um ein. Gerät, bei dem der Gehäuseboden als separates Bauteil beispielsweise über Anschlusselemente in Form von Spann- oder Klappverschlussvorrichtungen mit dem Gehäuse fest verbunden und im Bedarfsfall nach dem Lösen dieser Anschlüsse einfach vom Gehäuse zu trennen ist. Dabei wird gleichzeitig über ein im Gehäuse fest eingebautes elektrisches Steckerelement, das z. B. in Form einer Kontaktschiene ausgebildet sein kann, die Verbindung zwischen Gehäuse und Gehäuseboden selbsttätig getrennt.

Hierbei ist unter "selbsttätig" zu verstehen, dass das Steckerelement so ausgebildet ist, dass die Trennung und die spätere Wiederherstellung der Kontaktstellen zwischen Gehäuse und Gehäuseboden ohne zusätzliche Maßnahmen oder Handgriffe erfolgt.

Vorteilhafte Weiterbildungen ergeben sich aus den abhängigen Patentansprüchen.

Der Vollständigkeit halber wird noch auf die US 5,607,794 A hingewiesen, bei der aber nicht der Gehäuseboden, sondern ein zusätzliches, bodenseitiges Bauelement vom Gehäuse lösbar ausgebildet ist. Gehäuseboden und Gehäuse bilden bei dieser Lösung eine Einheit, so dass die Batterie nicht ohne weiteres auswechselbar ist.

Das erfindungsgemäße Mehrzweckstartergerät einschließlich seiner vorteilhaften Weiterbildungen gemäß der abhängigen Patentansprüche wird nachfolgend anhand der zeichnerischen Darstellung eines bevorzugten Ausführungsbeispiels näher erläutert.

Es zeigt schematisch
- Figur 1: perspektivisch das erfindungsgemäße Mehrzweckstartergerät mit Gehäuse und Gehäuseboden;
- Figur 2.: im Schnitt das Mehrzweckstartergerät gemäß Figur 1;
- Figur 3: in Seitenansicht den Einbau der Batterie auf dem Gehäuseboden;
- Figur 4: perspektivisch als Durchsichtdarstellung das Mehrzweckstartergerät mit vom Gehäuseboden abgehobenen Gehäuse.

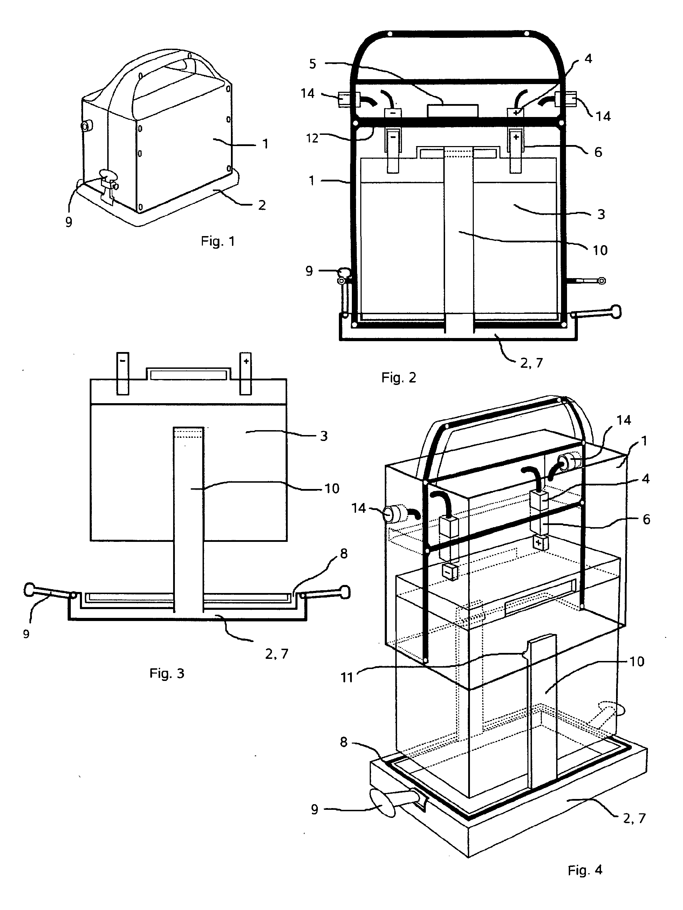

Das in den Figuren 1 bis 4 dargestellte tragbare Mehrzweckstartergerät besteht aus einem Gehäuse 1 mit einem Gehäuseboden 2 zur Aufnahme mindestens einer aufladbaren Batterie 3 und im Gehäuse 1 angeordneten elektrischen Anschlusselementen 4 zur Verbindung der Batterie 3 mit im Gehäuse 1 angeordneten elektrischen Komponenten 5.

In Figur 1 ist das erfindungsgemäße Mehrzweckstartergerät perspektivisch dargestellt. Wie aus Figur 2 ersichtlich, ist dabei der Gehäuseboden 2 fest, aber lösbar am Gehäuse 1 angeordnet. Zwischen der Batterie 3 und den elektrischen Anschlusselementen 4 ist mindestens ein sich beim Lösen des Gehäusebodens 2 vom Gehäuse 1 trennendes elektrisches Steckerelement 6 vorgesehen.

Gemäß den Figuren 1 bis 4 wird bei der bevorzugten Ausführungsform stets davon ausgegangen, dass die Batterie mit Ihren Anschlusspolen nach oben weisend auf den Gehäuseboden 2 aufgestellt wird. Je nach Batterietyp ist dies natürlich nicht zwingend, d. h. eine auf der Seite liegende Position oder sogar eine mit nach unteren weisenden Polen ist ebenfalls realisierbar.

Wie in Figur 3 dargestellt, ist der Gehäuseboden 2 zur Aufnahme der Batterie 3 aus einer lasttragenden und formangepassten Bodenplatte 7 gebildet. Die Bodenplatte 7 ist so ausgeformt, dass die Batterie 3, vorzugsweise ein aufladbarer Akkumulator, auf die Bodenplatte 7 ohne weitere Vorbereitungsmaßnahmen aufgesetzt werden kann. Darüberhinaus ist die Bodenplatte 7 mit einer randseitig umlaufenden Nut 8 zur Aufnahme und Fixierung des Gehäuses 1 am Gehäuseboden 2 versehen.

Zur lösbaren Befestigung des Gehäusebodens 2 am Gehäuse 1 ist zwischen dem Gehäuseboden 2 und dem Gehäuse 1 mindestens ein Verschlusselement 9 vorgesehen. Wie auf den Figuren 1 und 3 erkennbar, besteht ein derartiges Verschlusselement 9 vorzugsweise aus einem am Gehäuse 1 verriegelbaren Spann- oder Klappverschluss. Je nach Ausführungsform kann das Verschlusselement 9 an zwei sich gegenüberliegenden Seiten, vorzugsweise an den schmaleren Seiten des Gehäuses 1 angeordnet sein.

In Figur 2, 3 und 4 ist dargestellt, dass gehäuseinnenseitig am Gehäuseboden 2 mindestens ein Halteelement 10 zur Befestigung der Batterie 3 am Gehäuseboden 2 vorgesehen ist. Dieses Halteelement 10 ist vorzugsweise flexibel, klammerförmig und höhenverstellbar ausgebildet und mit dem Gehäuseboden 2 verbunden. Es ist batterieoberkantenseitig mit einem Verrastungsvorsprung 11 zur Verrastung der Batterie 3 mit dem Halteelement 10 versehen. Je nach Ausführung können derartige Halteelemente 10 sowohl an zwei sich gegenüberliegenden Seiten als auch an weiteren Seiten der Batterie 3 angeordnet werden. Damit wird sichergestellt, dass die Batterie 3 bei Transportvorgängen oder bei schräger Positionierung des Mehrzweckstartergeräts fest mit dem Gehäuseboden 2 verbunden bleibt.

Um dem Gerät die erforderliche Stabilität und Stoßfestigkeit zu geben, ist, wie in Figur 2 dargestellt, zwischen zwei gegenüberliegend angeordneten, vertikalen Gehäusewänden innerhalb des Gehäuses 1 mindestens ein horizontal verlaufendes Verbindungselement 12 vorgesehen. Die Befestigung des Verbindungselements 12 an den Gehäusewänden erfolgt vorzugsweise mittels Steckverbindern, die einfach und leicht am Gehäuse 1 zu montieren, festzustellen und im Bedarfsfall wieder zu lösen sind.

Eine bevorzugte Ausführungsform des Verbindungselements 12 besteht in der Ausgestaltung dieses Bauteils als Montagebrücke, die zumindest zur Aufnahme der elektrischen Anschlusselemente 4 ausgebildet ist. Idealerweise kann eine derartige Montagebrücke zur Aufnahme weiterer elektrischer Komponenten verwendet werden, wie beispielsweise zur Installation eines Batterieladegeräts, eines Stromwandlers oder eines Kompressors.

In Figur 2 ist weiterhin dargestellt, dass das elektrische Steckerelement 6 als zweipoliger Steckverbinder zur Verbindung mit beiden Polen der Batterie 3 und den elektrischen Anschlusselementen 4 ausgebildet ist. Die elektrischen Anschlusselemente 4 sind batterieseitig vorzugsweise als Kabelschuhe ausgebildet, die im zusammengebauten Zustand des tragbaren Mehrzweckstartergeräts den permanenten Kontakt zur Batterie 3 herstellen. Derartige Kabelschuhe sind vorzugsweise so gestaltet, dass sie inwändig mit metallisch leitenden Kontaktschienen versehen sind und eine Ummantelung aus nichtleitendem Material, z. B. Kunststoff, haben. Durch ihre polseitig speziell ausgebildete Einführformgebung ermöglichen derartige Kabelschuhe ohne weitere zusätzliche Maßnahmen oder Handgriffe ein einfaches Aufsetzen des Gehäuses 1 auf den Gehäuseboden 2. Beim Abheben des Gehäuses 1 vom Gehäuseboden 2 erfolgt eine selbsttätige Auftrennung des elektrischen Systems (der Batteriepole von den Anschlusselementen 4).

Wie in den Figuren 1 und 4 dargestellt, ist außenseitig am Gehäuse 1 ein zweipoliger elektrischer Anschluss 14 zum lösbaren Anschluss von Starthilfekabeln vorgesehen. Ein derartiger Anschluss 14 ist vorzugsweise farblich unterschiedlich ausgeführt und mit "+" und "-" gekennzeichnet.

In einer weiteren vorteilhaften Ausführungsform dieses tragbaren Mehrzweckstartergeräts kann außen am Gehäuse 1 ein abnehmbares, flexibles LED-Band mit Leuchtfunktion angeordnet sein. Diese zusätzliche, ohne weiteres vorstellbare (deshalb nicht extra dargestellte) Einrichtung, erweist sich insbesonders bei Hilfsaktionen im Winter als überaus vorteilhaft, da das LED-Band sehr einfach von einer Halterung am Gehäuse 1 abgewickelt und beispielsweise zur Beleuchtung eines Motorraums eingesetzt werden kann. Da der Energieverbrauch eines derartigen LED-Bandes gering ist, kann diese Lichtquelle über einen längeren Zeitraum genutzt werden.

### Bezugszeichenliste

- 1: Gehäuse
- 2: Gehäuseboden
- 3: Batterie
- 4: Elektrisches Anschlusselement
- 5: Elektrische Komponente
- 6: Elektrisches Steckerelement
- 7: Bodenplatte
- 8: Nut
- 9: Verschlusselement
- 10: Halteelement
- 11: Verrastungsvorsprung
- 12: Verbindungselement
- 14: Zweipoliger elektrischer Anschluss

## Patentansprüche

1. Tragbares Mehrzweckstartergerät, bestehend aus einem Gehäuse (1) mit einem Gehäuseboden (2) zur Aufnahme mindestens einer aufladbaren Batterie (3) und im Gehäuse (1) angeordneten elektrischen Anschlusselementen (4) zur Verbindung der Batterie (3) mit im Gehäuse (1) angeordneten elektrischen Komponenten (5),
**dadurch gekennzeichnet,**
**dass** der Gehäuseboden (2) fest, aber lösbar am Gehäuse (1) angeordnet und zwischen der Batterie (3) und den elektrischen Anschlusselementen (4) mindestens ein sich beim Lösen des Gehäusebodens (2) vom Gehäuse (1) trennendes elektrisches Steckerelement (6) vorgesehen ist.

2. Tragbares Mehrzweckstartergerät nach Anspruch 1,
**dadurch gekennzeichnet,**
**dass** der Gehäuseboden (2) zur Aufnahme der Batterie (3) aus einer lasttragenden und formangepassten Bodenplatte (7) gebildet ist.

3. Tragbares Mehrzweckstartergerät nach Anspruch 2,
**dadurch gekennzeichnet,**
**dass** die Bodenplatte (7) mit einer randseitig umlaufenden Nut (8) zur Aufnahme und Fixierung des Gehäuses (1) am Gehäuseboden (2) versehen ist.

4. Tragbares Mehrzweckstartergerät nach den Ansprüchen 1 bis 3,
**dadurch gekennzeichnet,**
**dass** zwischen dem Gehäuseboden (2) und dem Gehäuse (1) mindestens ein Verschlusselement (9) zur lösbaren Befestigung des Gehäusebodens (2) am Gehäuse (1) vorgesehen ist.

5. Tragbares Mehrzweckstartergerät nach den Ansprüchen 1 bis 4,
**dadurch gekennzeichnet,**
**dass** gehäuseinnenseitig am Gehäuseboden (2) mindestens ein Halteelement (10) zur Befestigung der Batterie (3) am Gehäuseboden (2) vorgesehen ist.

6. Tragbares Mehrzweckstartergerät nach Anspruch 5,
**dadurch gekennzeichnet,**
**dass** das Halteelement (10) klammerförmig ausgebildet und batterieoberkantenseitig mit einem Verrastungsvorsprung (11) zur Verrastung der Batterie (3) mit dem Halteelement (10) versehen ist.

7. Tragbares Mehrzweckstartergerät nach den Ansprüchen 1 bis 6,
**dadurch gekennzeichnet,**
**dass** zwischen zwei gegenüberliegend angeordneten vertikalen Gehäusewänden innerhalb des Gehäuses (1) mindestens ein horizontal verlaufendes Verbindungselement (12) vorgesehen ist, wobei dieses vorzugsweise in Form einer Montagebrücke mindestens zur Aufnahme der elektrischen Anschlusselemente (4) ausgebildet ist.

8. Tragbares Mehrzweckstartergerät nach den Ansprüchen 1 bis 7,
**dadurch gekennzeichnet,**
**dass** das elektrische Steckerelement (6) als zweipoliger Steckverbinder zur Verbindung mit beiden Polen der Batterie (3) und den elektrischen Anschlusselementen (4) ausgebildet ist.

9. Tragbares Mehrzweckstartergerät nach den Ansprüchen 1 bis 8,
**dadurch gekennzeichnet,**
**dass** an der Außenseite des Gehäuses (1) ein zweipoliger elektrischer Anschluss (14) zum lösbaren Anschluss von Starthilfekabeln vorgesehen sind.

10. Tragbares Mehrzweckstartergerät nach den Ansprüchen 1 bis 9,
**dadurch gekennzeichnet,**
**dass** außen am Gehäuse (1) mindestens ein abnehmbares, flexibles LED-Band mit Leuchtfunktion angeordnet ist.
